# EUROPEAN PATENT APPLICATION

(11) **EP 4 513 975 A1**
(43) Date of publication of application: **26.02.2025**
(21) Application number: 22937711.4
(22) Date of filing: 18.04.2022
(51) Int. Cl.: H04W 52/02

(54) **METHOD AND APPARATUS FOR TRANSMITTING INFORMATION OF SIGNAL QUALITY THRESHOLD VALUE, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/087425
(87) International publication number: WO 2023/201471

(57) **Abstract**

Provided in the present disclosure are a method and apparatus for transmitting information of a signal quality threshold value, which is used for waking up a terminal, and a readable storage medium, which are applied to the technical field of wireless communications. The method comprises: a network device sending, to a user equipment, information used for indicating a signal quality threshold value of at least one broadcast or multicast signal, wherein the broadcast or multicast signal is a signal which is received by a low-power wake-up signal (LPWUS) receiver of the user equipment; and on the basis of the signal quality threshold value, the user equipment determining whether to turn on a main receiver. **In** the present disclosure, a user equipment acquires a signal quality threshold value of at least one broadcast or multicast signal, such that the user equipment can determine, according to information of the signal quality threshold value, whether to turn on a main receiver in order to turn on the main receiver in a timely manner, such that the main receiver can conveniently perform RRM measurement as soon as possible; in addition, the user equipment can more accurately control the turning-on and turning-off of the main receiver, thereby further reducing power consumption.

## Description

### TECHNICAL FIELD

This disclosure relates to the field of wireless communication technology, and in particular, to a method, an apparatus and a readable storage medium for transmitting quality threshold information of signal for waking up a terminal.

### BACKGROUND

In some wireless communication technologies, low-power (LP) wake-up signal (WUS) can be applied. When applying the LPWUS, a separate receiver corresponding to the LPWUS can be called an LPWUS receiver. User equipment (UE) uses a primary transceiver to process uplink data and downlink data, and uses a separate receiver to receive LPWUS. For example, when the primary transceiver of the UE is in a sleep state, after receiving LPWUS through the separate receiver corresponding to WUS, the primary transceiver is to be turned on so as to be in a working state. When the primary transceiver of the UE is in the sleep state, if the separate receiver corresponding to WUS does not receive LPWUS or receives LPWUS indicating not wake up, the sleep state of the primary transceiver will be maintained.

How to determine whether to wake up the primary receiver based on the signal received by the LPWUS receiver is a problem that needs to be solved.

### SUMMARY

This disclosure provides a method, an apparatus and a readable storage medium for transmitting quality threshold information of signal for waking up a terminal.

According to a first aspect, there is provided a method for receiving quality threshold information of signal for waking up a terminal, which is performed by a user equipment (UE) and includes:
receiving information indicating a signal quality threshold of at least one broadcast or multicast signal, where the broadcast or multicast signal is a signal received by a low-power wake-up signal (LPWUS) receiver of the UE; and
determining whether to turn on a primary receiver based on the signal quality threshold.

In this method, the UE obtains the signal quality threshold of at least one broadcast or multicast signal, so that the UE can determine whether to turn on the primary receiver based on the signal quality threshold information, thereby facilitating to turn on the primary receiver in time and enabling the primary receiver to perform radio resource management (RRM) measurement(s) as soon as possible. In addition, the UE can control the turning on and off of the primary receiver more accurately, thereby further saving power consumption.

In some possible embodiments, the at least one broadcast or multicast signal includes at least one of: a synchronization signal corresponding to the LPWUS receiver, and a wake-up signal corresponding to the LPWUS receiver.

In some possible embodiments, a quality threshold of the synchronization signal and a quality threshold of the wake-up signal are the same or different.

In some possible embodiments, a signal quality corresponding to the signal quality threshold includes at least one of: reference signal receiving power (RSRP), reference signal receiving quality (RSRQ), signal amplitude, signal power, and signal energy.

In some possible embodiments, receiving the information indicating the signal quality threshold of the at least one broadcast or multicast signal includes:
receiving a system message, where the system message includes the information indicating the signal quality threshold of the at least one broadcast or multicast signal.

In some possible embodiments, receiving the information indicating the signal quality threshold of the at least one broadcast or multicast signal includes:
receiving, by using the primary receiver in an operating state, the information indicating the signal quality threshold of the at least one broadcast or multicast signal.

In some possible embodiments, the method further includes:
measuring, by using the LPWUS receiver, a signal quality of the at least one broadcast or multicast signal;
where determining whether to turn on the primary receiver based on the signal quality threshold includes:
   determining whether to wake up the primary receiver based on the signal quality and the signal quality threshold.

In some possible embodiments, determining whether to wake up the primary receiver based on the signal quality and the signal quality threshold includes:
in response to the signal quality meeting a wake-up condition corresponding to the signal quality threshold, waking up the primary receiver.

In some possible embodiments, the wake-up condition is: the signal quality is less than or equal to the signal quality threshold information, or the signal quality is greater than the signal quality threshold and a difference is less than a preset value.

In some possible embodiments, receiving information indicating the preset value sent by a network device; or determining the preset value according to a protocol.

In some possible embodiments, the method further includes:
sending, through the LPWUS receiver, information indicating a wake-up cause to the primary receiver, where the wake-up cause is that the signal quality meets the wake-up condition corresponding to the signal quality threshold.

According to a second aspect, there is provided a method for sending quality threshold information of signal for waking up a terminal, which is performed by a network device and includes:
sending information indicating a signal quality threshold of at least one broadcast or multicast signal to a UE, where the broadcast or multicast signal is a signal received by an LPWUS receiver of the UE.

In this method, the network device sends information on the signal quality threshold of at least one broadcast or multicast signal, so that the UE, after receiving the at least one broadcast or multicast signal through the LPWUS receiver, can determine whether to turn on the primary receiver based on the corresponding quality threshold information, thereby facilitating the UE, upon receiving a broadcast or multicast signal with a signal quality lower than the signal quality threshold, to turn on the primary receiver in time and perform RRM measurement(s). In addition, the UE can control the turning on and off of the primary receiver more accurately, thereby further saving power consumption.

In some possible embodiments, the at least one broadcast or multicast signal includes at least one of: a synchronization signal corresponding to the LPWUS receiver, and a wake-up signal corresponding to the LPWUS receiver.

In some possible embodiments, a quality threshold of the synchronization signal and a quality threshold of the wake-up signal are the same or different.

In some possible embodiments, a signal quality corresponding to the signal quality threshold includes at least one of: RSRP, RSRQ, signal amplitude, signal power, and signal energy.

In some possible embodiments, sending the information indicating the signal quality threshold of the at least one broadcast or multicast signal includes:
sending a system message, where the system message includes the information indicating the signal quality threshold of the at least one broadcast or multicast signal.

In some possible embodiments, a wake-up condition corresponding to the signal quality threshold includes that a difference between a signal quality and the signal quality threshold is less than a preset value; and the method further includes: sending information indicating the preset value to the UE.

According to a third aspect, there is provided an apparatus for receiving quality threshold information of signal for waking up a terminal, which is configured at a UE and includes:
a transceiving module, configured to receive information indicating a signal quality threshold of at least one broadcast or multicast signal, where the broadcast or multicast signal is a signal received by an LPWUS receiver of the UE; and
a processing module, configured to determine whether to turn on a primary receiver based on the signal quality threshold.

According to a fourth aspect, there is provided an apparatus for sending quality threshold information of signal for waking up a terminal, which is configured at a network device and includes:
a transceiving module, configured to send information indicating a signal quality threshold of at least one broadcast or multicast signal, where the broadcast or multicast signal is a signal received by an LPWUS receiver of the UE.

According to a fifth aspect, there is provided an electronic device, including a processor and a memory, where,
the memory is configured to store a computer program; and
the processor is configured to execute the computer program, thereby implementing the method according to the first aspect or any possible embodiment thereof.

According to a sixth aspect, there is provided a communication device, including a processor and a memory, where,
the memory is configured to store a computer program; and
the processor is configured to execute the computer program, thereby implementing the method according to the second aspect or any possible embodiment thereof.

According to a seventh aspect, there is provided a computer-readable storage medium storing instructions thereon, where the instructions, upon being invoked and executed on a computer, cause the computer to implement the method according to the first aspect or any possible embodiment thereof.

According to an eighth aspect, there is provided a computer-readable storage medium storing instructions thereon, where the instructions, upon being invoked and executed on a computer, cause the computer to implement the method according to the second aspect or any possible embodiment thereof.

### BRIEF DESCRIPTION OF THE DRAWINGS

The drawings described here are used to provide a further understanding of some embodiments of this disclosure and constitute a part of this application. The schematic embodiments of this disclosure and their descriptions are used to explain some embodiments of this disclosure without constituting an improper limitation on the embodiments of this disclosure in the drawings.

The accompanying drawings, which are incorporated in and constitute a part of this specification, illustrate embodiments consistent with some embodiments of this disclosure and, together with the description, serve to explain principles of some embodiments of this disclosure.
FIG. 1 is a schematic diagram of a wireless communication system architecture according to some embodiments of this disclosure.
FIG. 2 is a flow chart of a method for transmitting quality threshold information of signal for waking up a terminal according to an exemplary embodiment.
FIG. 3 is a flow chart of a method of receiving quality threshold information of signal for waking up a terminal according to an exemplary embodiment.
FIG. 4 is a flow chart of a method of receiving quality threshold information of signal for waking up a terminal according to an exemplary embodiment.
FIG. 5 is a flow chart of a method of receiving quality threshold information of signal for waking up a terminal according to an exemplary embodiment.
FIG. 6 is a flow chart of a method for sending quality threshold information of signal for waking up a terminal according to an exemplary embodiment.
FIG. 7 is a structural diagram of an apparatus for receiving quality threshold information of signal for waking up a terminal according to an exemplary embodiment.
FIG. 8 is a structural diagram of an apparatus for receiving quality threshold information of signal for waking up a terminal according to an exemplary embodiment.
FIG. 9 is a structural diagram of an apparatus for sending quality threshold information of signal for waking up a terminal according to an exemplary embodiment.
FIG. 10 is a structural diagram of an apparatus for sending quality threshold information of signal for waking up a terminal according to an exemplary embodiment.

### DETAILED DESCRIPTION

Some embodiments of this disclosure will now be further described with reference to the accompanying drawings and detailed embodiments.

Exemplary embodiments will be described in detail herein, examples of which are illustrated in the accompanying drawings. When the following description refers to the drawings, the same numbers in different drawings refer to the same or similar elements unless otherwise indicated. The embodiments described in the following exemplary embodiments do not represent all implementations consistent with embodiments of this disclosure. Rather, they are merely examples of apparatuses and methods consistent with aspects of the disclosure as detailed in the appended claims.

The terminology used in the embodiments of this disclosure is for the purpose of describing specific embodiments only and is not intended to limit the embodiments of this disclosure. As used in the embodiments of this disclosure and the appended claims, the singular forms "a/an" and "the" are intended to include the plural forms as well, unless the context clearly dictates otherwise. It will also be understood that the term "and/or" as used herein refers to and includes any and all possible combinations of one or more of the associated listed items.

It should be understood that although the terms "first", "second", "third", etc. may be used to describe various information in the embodiments of this disclosure, the information should not be limited to these terms. These terms are only used to distinguish information of the same type from each other. For example, without departing from the scope of the embodiments of this disclosure, the first information may also be called second information, and similarly, the second information may also be called first information. Depending on the context, the words "if" and "in case" as used herein may be interpreted as "when" or "upon" or "in response to determining that..."

Embodiments of this disclosure are described in detail below, examples of which are illustrated in the accompanying drawings, where the same or similar reference numerals refer to the same or similar elements throughout. The embodiments described below with reference to the accompanying drawings are exemplary and intended to explain this disclosure without being construed as limitations of this disclosure.

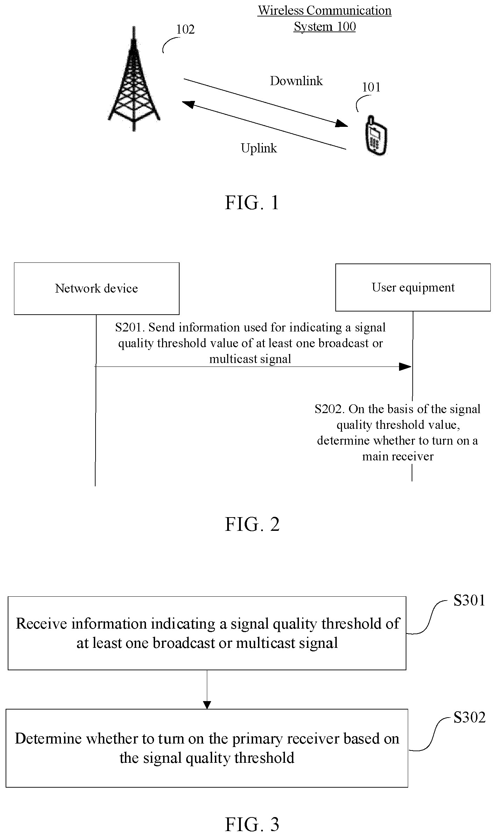

As shown in FIG. 1, some embodiments of this disclosure provide a wireless communication system 100 to which a method for transmitting quality threshold information of signal for waking up a terminal can be applied. The wireless communication system may include but is not limited to a network device 101 and a UE 102. The UE 102 is configured to support carrier aggregation, and the UE 102 can be connected to multiple carrier units of the network device 101, including a primary carrier unit and one or more secondary carrier units.

It should be understood that the above wireless communication system 100 can be applied to both low-frequency scenarios and high-frequency scenarios. Application scenarios of the wireless communication system 100 include but are not limited to long term evolution (LTE) system, LTE frequency division duplex (FDD) system, LTE time division duplex (TDD) system, worldwide interoperability for micro wave access (WiMAX) communication system, cloud radio access network (CRAN) system, futural 5th-Generation (5G) system, new radio (NR) communication system, future-evolved public land mobile network (PLMN) system, or the like.

The UE 102 shown above may be a user equipment, a terminal, an access terminal, a terminal unit, a terminal station, a mobile station (MS), a remote station, a remote terminal, a mobile terminal, a wireless communication device, a terminal agent, a user device, or the like. The UE 102 may have a wireless transceiver function, which can communicate (e.g., in wireless manner) with one or more network devices 101 of one or more communication systems, and accept network services provided by the network device 101. Here, the network device 101 includes but is not limited to a base station shown in the drawings.

Herein, the UE 102 may be a cellular phone, a cordless phone, a session initiation protocol (SIP) phone, a wireless local loop (WLL) station, a personal digital assistant (PDA) device, a handheld device with wireless communication functions, a computing device or another processing device connected to a wireless modem, a vehicle-mounted device, a wearable device, a UE in futural 5G network, a UE in future-evolved PLMN network, or the like.

The network device 101 may be an access network device (or access network site). Herein, the access network device refers to a device that provides network access functions, such as a radio access network (RAN) base station and the like. The network device may specifically include a base station (BS) device, or include the base station device, a radio resource management device(s) used to control the base station device, and the like. The network device may also include a relay station (relay device), an access point, a base station in futural 5G network, a base station in future-evolved PLMN network, an NR base station, or the like. The network device can be a wearable device or a vehicle-mounted device. The network device may also be a communication chip with a communication module.

For example, the network device 101 includes but is not limited to: a gnodeB (gNB) in 5G, an evolved node B (eNB) or a radio network controller (RNC) in the LTE system, a Node B (NB) in the WCDMA system, a wireless controller and a base station controller (BSC) under the CRAN system, a base transceiver station (BTS) in the GSM system or CDMA system, a home base station (e.g., home evolved nodeB, or home node B, HNB), a baseband unit (BBU), a transmitting and receiving point (TRP), a transmitting point (TP), a mobile switching center, or the like.

Embodiments of this disclosure provide a method for transmitting quality threshold information of signal for waking up a terminal. FIG. 2 is a flow chart of a method for transmitting quality threshold information of signal for waking up a terminal according to an exemplary embodiment. As shown in FIG. 2, the method includes steps S201-S202, details of which are as follows.

In step S201, a network device sends information indicating a signal quality threshold of at least one broadcast or multicast signal to a UE.

The broadcast or multicast signal is a signal received by a low-power wake-up signal (LPWUS) receiver of the UE.

In an example, the broadcast or multicast signal is a synchronization signal corresponding to the LPWUS receiver. This synchronization signal corresponds to a respective signal quality threshold, and the network device sends information to the UE, where this information is indicative of the signal quality threshold of this synchronization signal.

In another example, the broadcast or multicast signal is a wake-up signal corresponding to the LPWUS receiver. This wake-up signal corresponds to a respective signal quality threshold, and the network device sends information to the UE, where this information is indicative of the signal quality threshold of this wake-up signal.

In another example, the broadcast or multicast signal includes the synchronization signal corresponding to the LPWUS receiver and the wake-up signal corresponding to the LPWUS receiver. The synchronization signal corresponds to a respective signal quality threshold, and the wake-up signal corresponds to a respective signal quality threshold. The quality threshold of the synchronization signal and the quality threshold of the wake-up signal are the same or different. The network device sends information to the UE, where this information is indicative of the signal quality threshold of the synchronization signal and the signal quality threshold of the wake-up signal. In other words, the network device can separately configure the quality thresholds of the synchronization signal and the wake-up signal, and the configured thresholds can be the same or different.

In some possible embodiments, a signal quality corresponding to the signal quality threshold includes at least one of the following: reference signal receiving power (RSRP), reference signal receiving quality (RSRQ), signal amplitude, signal power, and signal energy.

In an example, when the broadcast or multicast signal is the synchronization signal corresponding to the LPWUS receiver, the signal quality of the synchronization signal is RSRP.

In another example, when the broadcast or multicast signal is the wake-up signal corresponding to the LPWUS receiver, the signal quality of the synchronization signal is the signal amplitude.

In some possible embodiments, when referring to that the network device sends information indicating the signal quality threshold of at least one broadcast or multicast signal to the UE, it includes: sending a system message, where the system message includes the information indicating the signal quality threshold of the at least one broadcast or multicast signal.

In some possible embodiments, receiving the information indicating the signal quality threshold of the at least one broadcast or multicast signal includes: receiving, by using the primary receiver in an operating state, the information indicating the signal quality threshold of the at least one broadcast or multicast signal, so that after the primary receiver is subsequently in a sleep state, the LPWUS receiver can determine whether to wake up the primary receiver based on the received broadcast or multicast signal and its corresponding signal quality threshold information.

In step S202, the UE determines whether to turn on the primary receiver based on the signal quality threshold.

In some possible embodiments, the UE determines whether to turn on the primary receiver based on a signal quality and the signal quality threshold of the at least one broadcast or multicast signal.

In some possible embodiments, in response to the signal quality meeting a wake-up condition corresponding to the signal quality threshold, the primary receiver is woken up; in response to the signal quality not meeting the wake-up condition corresponding to the signal quality threshold, the primary receiver is not woken up.

In an example, the wake-up condition is that the signal quality is less than or equal to the signal quality threshold information.

In another example, the wake-up condition is that a difference between the signal quality and the signal quality threshold is less than a preset value.

In yet another example, the wake-up condition is that the signal quality is less than or equal to the signal quality threshold information, and a difference between the signal quality and the signal quality threshold is less than a preset value.

In some possible embodiments, the UE may receive information indicating the preset value sent by the network device, so as to acquire the preset value. Alternatively, the UE may determine the preset value according to a protocol. Alternatively, the preset value is a default value.

In some possible embodiments, after it is determined to turn on the primary receiver, a wake-up signal and information indicating a wake-up cause are sent to the primary receiver through the LPWUS receiver. The wake-up cause is that the signal quality meets the wake-up condition corresponding to the signal quality threshold. Herein, the order in which the wake-up signal and the information indicating the wake-up cause are sent is not limited. In an example, the wake-up signal and the information indicating the wake-up cause may be sent at the same time.

In some possible embodiments, it is included between steps S201 and S202 that: the UE receives the at least one broadcast or multicast signal, and measures, by using the LPWUS receiver, the signal quality of the at least one broadcast or multicast signal. In this method, the UE obtains signal quality threshold information of the LPWUS received by the LPWUS receiver, so that the UE can determine whether to turn on the primary receiver based on the signal quality threshold information, thereby facilitating to turn on the primary receiver in time and enabling the primary receiver to perform radio resource management (RRM) measurement(s) as soon as possible when the signal quality of the received broadcast or multicast signal is lower than the signal quality threshold. In addition, the UE can control the turning on and off of the primary receiver more accurately, thereby further saving power consumption.

Embodiments of this disclosure provide a method for receiving quality threshold information of signal for waking up a terminal, which is performed by a UE. FIG. 3 is a flow chart of a method for receiving quality threshold information of signal for waking up a terminal according to an exemplary embodiment. As shown in FIG. 3, the method includes steps S301-S302, details of which are as follows.

In step S301, information indicating a signal quality threshold of at least one broadcast or multicast signal is received.

The broadcast or multicast signal is a signal received by an LPWUS receiver of the UE.

In an example, the broadcast or multicast signal is a synchronization signal corresponding to the LPWUS receiver. This synchronization signal corresponds to a respective signal quality threshold, and a network device sends information to the UE, where this information is indicative of the signal quality threshold of this synchronization signal.

In another example, the broadcast or multicast signal is a wake-up signal corresponding to the LPWUS receiver. This wake-up signal corresponds to a respective signal quality threshold, and the network device sends information to the UE, where this information is indicative of the signal quality threshold of this wake-up signal.

In another example, the broadcast or multicast signal includes the synchronization signal corresponding to the LPWUS receiver and the wake-up signal corresponding to the LPWUS receiver. The synchronization signal corresponds to a respective signal quality threshold, and the wake-up signal corresponds to a respective signal quality threshold. The quality threshold of the synchronization signal and the quality threshold of the wake-up signal are the same or different. The network device sends information to the UE, where this information is indicative of the signal quality threshold of the synchronization signal and the signal quality threshold of the wake-up signal. In other words, the network device can separately configure the quality thresholds of the synchronization signal and the wake-up signal, and the configured thresholds can be the same or different. In some possible embodiments, a signal quality corresponding to the signal quality threshold includes at least one of the following: RSRP, RSRQ, signal amplitude, signal power, and signal energy.

In an example, when the broadcast or multicast signal is the synchronization signal corresponding to the LPWUS receiver, the signal quality of the synchronization signal is RSRP.

In another example, when the broadcast or multicast signal is the wake-up signal corresponding to the LPWUS receiver, the signal quality of the synchronization signal is the signal amplitude.

In some possible embodiments, receiving information indicating the signal quality threshold of at least one broadcast or multicast signal includes: receiving a system message, where the system message includes the information indicating the signal quality threshold of the at least one broadcast or multicast signal.

In some possible embodiments, receiving the information indicating the signal quality threshold of the at least one broadcast or multicast signal includes: receiving, by using the primary receiver in an operating state, the information indicating the signal quality threshold of the at least one broadcast or multicast signal, so that after the primary receiver is subsequently in a sleep state, the LPWUS receiver can determine whether to wake up the primary receiver based on the received broadcast or multicast signal and its corresponding signal quality threshold information.

In step S302, it is determined whether to turn on the primary receiver based on the signal quality threshold.

In some possible embodiments, it is determined whether to turn on the primary receiver based on a signal quality and the signal quality threshold of the at least one broadcast or multicast signal.

In some possible embodiments, in response to the signal quality meeting a wake-up condition corresponding to the signal quality threshold, the primary receiver is woken up; in response to the signal quality not meeting the wake-up condition corresponding to the signal quality threshold, the primary receiver is not woken up.

In an example, the wake-up condition is that the signal quality is less than or equal to the signal quality threshold information.

In another example, the wake-up condition is that a difference between the signal quality and the signal quality threshold is less than a preset value.

In yet another example, the wake-up condition is that the signal quality is less than or equal to the signal quality threshold information, and a difference between the signal quality and the signal quality threshold is less than a preset value.

In some possible embodiments, the UE may receive information indicating the preset value sent by the network device, so as to acquire the preset value. Alternatively, the UE may determine the preset value according to a protocol. Alternatively, the preset value is a default value.

In some possible embodiments, after it is determined to turn on the primary receiver, a wake-up signal and information indicating a wake-up cause are sent to the primary receiver through the LPWUS receiver. The wake-up cause is that the signal quality meets the wake-up condition corresponding to the signal quality threshold. Herein, the order in which the wake-up signal and the information indicating the wake-up cause are sent is not limited. In an example, the wake-up signal and the information indicating the wake-up cause may be sent at the same time.

In this method, the UE obtains signal quality threshold information of the LPWUS received by the LPWUS receiver, so that the UE can determine whether to turn on the primary receiver based on the signal quality threshold information, thereby facilitating to turn on the primary receiver in time and enabling the primary receiver to perform RRM measurement(s) as soon as possible when the signal quality of the received broadcast or multicast signal is lower than the signal quality threshold. In addition, the UE can control the turning on and off of the primary receiver more accurately, thereby further saving power consumption.

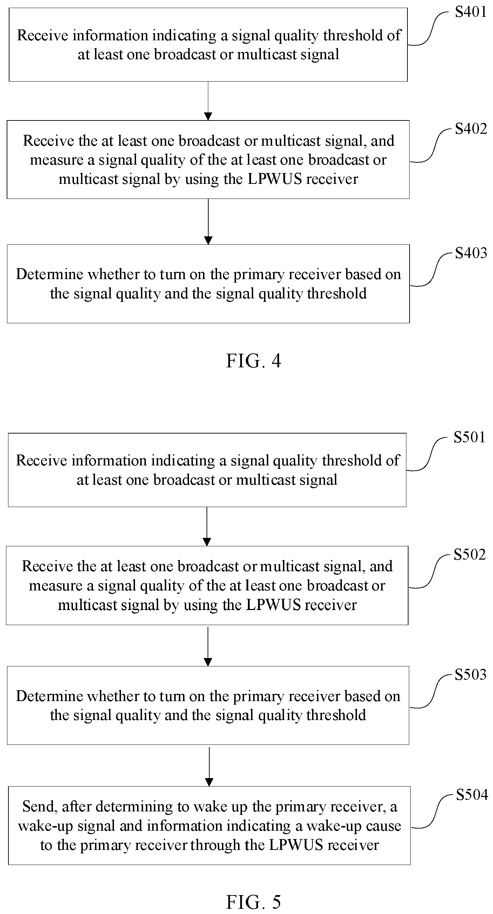

Embodiments of this disclosure provide a method for receiving quality threshold information of signal for waking up a terminal, which is performed by a UE. FIG. 4 is a flow chart of a method for receiving quality threshold information of signal for waking up a terminal according to an exemplary embodiment. As shown in FIG. 4, the method includes steps S401-S403, details of which are as follows.

In step S401, information indicating a signal quality threshold of at least one broadcast or multicast signal is received, where the broadcast or multicast signal is a signal received by an LPWUS receiver of the UE.

This step S401 is the same as step S301.

In step S402, the at least one broadcast or multicast signal is received, and a signal quality of the at least one broadcast or multicast signal is measured by using the LPWUS receiver.

In step S403, it is determined whether to turn on the primary receiver based on the signal quality and the signal quality threshold.

In some possible embodiments, in response to the signal quality meeting a wake-up condition corresponding to the signal quality threshold, the primary receiver is woken up; in response to the signal quality not meeting the wake-up condition corresponding to the signal quality threshold, the primary receiver is not woken up.

In an example, the broadcast or multicast signal is a synchronization signal corresponding to the LPWUS receiver. This synchronization signal corresponds to a respective signal quality threshold, and a network device sends information to the UE, where this information is indicative of the signal quality threshold of this synchronization signal.

In another example, the broadcast or multicast signal is a wake-up signal corresponding to the LPWUS receiver. This wake-up signal corresponds to a respective signal quality threshold, and the network device sends information to the UE, where this information is indicative of the signal quality threshold of this wake-up signal.

In another example, the broadcast or multicast signal includes the synchronization signal corresponding to the LPWUS receiver and the wake-up signal corresponding to the LPWUS receiver. The synchronization signal corresponds to a respective signal quality threshold, and the wake-up signal corresponds to a respective signal quality threshold. The quality threshold of the synchronization signal and the quality threshold of the wake-up signal are the same or different. The network device sends information to the UE, where this information is indicative of the signal quality threshold of the synchronization signal and the signal quality threshold of the wake-up signal. In other words, the network device can separately configure the quality thresholds of the synchronization signal and the wake-up signal, and the configured thresholds can be the same or different.

In some possible embodiments, the UE may receive information indicating the preset value sent by the network device, so as to acquire the preset value. Alternatively, the UE may determine the preset value according to a protocol. Alternatively, the preset value is a default value.

In some possible embodiments, after it is determined to turn on the primary receiver, a wake-up signal and information indicating a wake-up cause are sent to the primary receiver through the LPWUS receiver. The wake-up cause is that the signal quality meets the wake-up condition corresponding to the signal quality threshold. Herein, the order in which the wake-up signal and the information indicating the wake-up cause are sent is not limited. In an example, the wake-up signal and the information indicating the wake-up cause may be sent at the same time.

Embodiments of this disclosure provide a method for receiving quality threshold information of signal for waking up a terminal, which is performed by a UE. FIG. 5 is a flow chart of a method for receiving quality threshold information of signal for waking up a terminal according to an exemplary embodiment. As shown in FIG. 5, the method includes steps S501-S504, details of which are as follows.

In step S501, information indicating a signal quality threshold of at least one broadcast or multicast signal is received.

This step S501 is the same as step S301.

In step S502, the at least one broadcast or multicast signal is received, and a signal quality of the at least one broadcast or multicast signal is measured by using the LPWUS receiver.

In step S503, it is determined whether to turn on the primary receiver based on the signal quality and the signal quality threshold.

In step S504, after determining to wake up the primary receiver, a wake-up signal and information indicating a wake-up cause is sent to the primary receiver through the LPWUS receiver.

Herein, the wake-up cause is that the signal quality meets the wake-up condition corresponding to the signal quality threshold. The order in which the wake-up signal and the information indicating the wake-up cause are sent is not limited. In an example, the wake-up signal and the information indicating the wake-up cause may be sent at the same time.

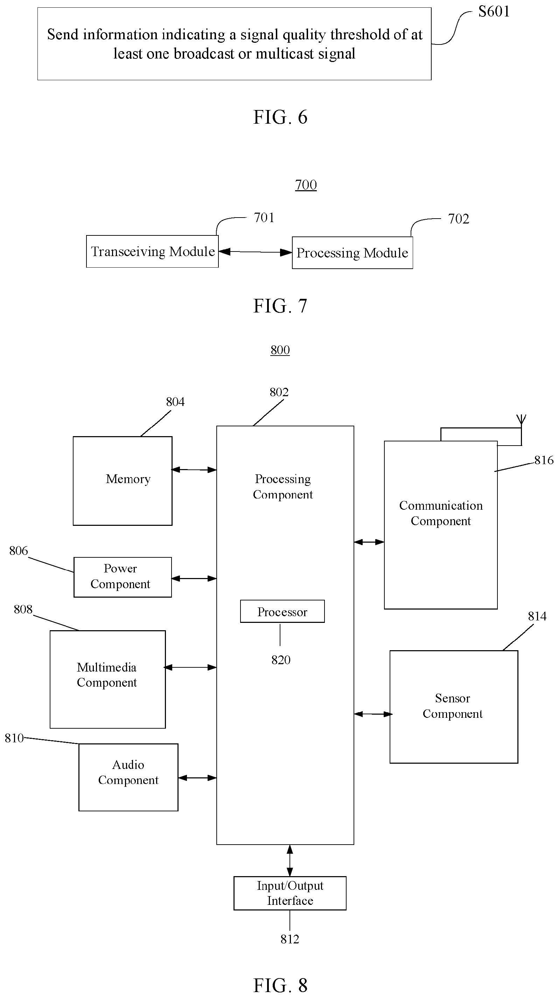

Embodiments of this disclosure provide a method for sending quality threshold information of signal for waking up a terminal, which is performed by a network device. FIG. 6 is a flow chart of a method for sending quality threshold information of signal for waking up a terminal according to an exemplary embodiment. As shown in FIG. 6, the method includes a step S601, details of which are as follows.

In step S601, information indicating a signal quality threshold of at least one broadcast or multicast signal is sent.

The broadcast or multicast signal is a signal received by a low-power wake-up signal (LPWUS) receiver of the UE.

In an example, the broadcast or multicast signal is a synchronization signal corresponding to the LPWUS receiver. This synchronization signal corresponds to a respective signal quality threshold, and the network device sends information to the UE, where this information is indicative of the signal quality threshold of this synchronization signal.

In another example, the broadcast or multicast signal is a wake-up signal corresponding to the LPWUS receiver. This wake-up signal corresponds to a respective signal quality threshold, and the network device sends information to the UE, where this information is indicative of the signal quality threshold of this wake-up signal.

In another example, the broadcast or multicast signal includes the synchronization signal corresponding to the LPWUS receiver and the wake-up signal corresponding to the LPWUS receiver. The synchronization signal corresponds to a respective signal quality threshold, and the wake-up signal corresponds to a respective signal quality threshold. The quality threshold of the synchronization signal and the quality threshold of the wake-up signal are the same or different. The network device sends information to the UE, where this information is indicative of the signal quality threshold of the synchronization signal and the signal quality threshold of the wake-up signal. In other words, the network device can separately configure the quality thresholds of the synchronization signal and the wake-up signal, and the configured thresholds can be the same or different.

In some possible embodiments, a signal quality corresponding to the signal quality threshold includes at least one of the following: RSRP, RSRQ, signal amplitude, signal power, and signal energy.

In some possible embodiments, a manner for sending the information indicating the signal quality threshold of at least one broadcast or multicast signal includes: sending a system message, where the system message includes the information indicating the signal quality threshold of the at least one broadcast or multicast signal.

In some possible embodiments, a wake-up condition for waking up the primary receiver of the UE corresponding to the signal quality threshold includes that a difference between the signal quality and the signal quality threshold is less than a preset value.

In an example, the wake-up condition is that the signal quality is less than or equal to the signal quality threshold information.

In another example, the wake-up condition is that the difference between the signal quality and the signal quality threshold is less than a preset value.

In yet another example, the wake-up condition is that the signal quality is less than or equal to the signal quality threshold information, and a difference between the signal quality and the signal quality threshold is less than a preset value.

In some possible embodiments, the preset value is a default value or a value defined by a protocol.

In some possible embodiments, the network device sends information indicating the preset value to the UE.

Based on the same concept as the above method embodiments, embodiments of this disclosure further provide an electronic device, which can have the functions of the UE 102 in the above method embodiments, and is configured to perform the steps performed by the UE 102 in the above embodiments. These functions can be implemented by hardware, by software, or by hardware executing corresponding software. The hardware or software includes one or more modules corresponding to the above functions.

In a possible embodiment, a communication device 700 shown in FIG. 7 can serve as the UE 102 involved in the above method embodiments, and perform the steps performed by the UE 102 in the above method embodiments.

The electronic device 700 includes a transceiving module 701 and a processing module 702.

The transceiving module 701 is configured to receive information indicating a signal quality threshold of at least one broadcast or multicast signal, where the broadcast or multicast signal is a signal received by an LPWUS receiver of the UE.

The processing module 702 is configured to determine whether to turn on a primary receiver based on the signal quality threshold.

In some possible embodiments, the at least one broadcast or multicast signal includes at least one of: a synchronization signal corresponding to the LPWUS receiver, and a wake-up signal corresponding to the LPWUS receiver.

In some possible embodiments, a signal quality corresponding to the signal quality threshold includes at least one of the following: RSRP, RSRQ, signal amplitude, signal power, and signal energy.

In some possible embodiments, the transceiving module 701 is further configured to receive a system message, where the system message includes the information indicating the signal quality threshold of at least one broadcast or multicast signal.

In some possible embodiments, the transceiving module 701 is further configured to receive, by using the primary receiver in an operating state, the information indicating the signal quality threshold of at least one broadcast or multicast signal.

In some possible embodiments, the transceiving module 701 is further configured to measure, by using the LPWUS receiver, the signal quality of the at least one broadcast or multicast signal; and the processing module 702 is further configured to determine whether to wake up the primary receiver based on the signal quality and the signal quality threshold.

In some possible embodiments, the processing module 702 is further configured to wake up the primary receiver in response to the signal quality meeting a wake-up condition corresponding to the signal quality threshold.

In some possible embodiments, the wake-up condition is: the signal quality is less than or equal to the signal quality threshold information, or a difference between the signal quality and the signal quality threshold is less than a preset value.

In some possible embodiments, the transceiving module 701 is further configured to receive information indicating the preset value sent by a network device.

In some possible embodiments, the transceiving module 701 is further configured to send, through the LPWUS receiver, information indicating a wake-up cause to the primary receiver, where the wake-up cause is that the signal quality meets the wake-up condition corresponding to the signal quality threshold.

When the electronic device is UE 102, its structure may also be as shown in FIG. 8.

FIG. 8 is a block diagram showing an apparatus for receiving quality threshold information of signal for waking up a terminal according to an exemplary embodiment. For example, the apparatus 800 may be a mobile phone, a computer, a digital broadcast terminal, a messaging device, a game console, a tablet device, a medical device, a fitness device, a personal digital assistant, and the like.

Referring to FIG. 8, the apparatus 800 may include one or more of the following components: processing component 802, memory 804, power component 806, multimedia component 808, audio component 810, input/output (I/O) interface 812, sensor component 814, and communication component 816.

The processing component 802 generally controls the overall operation of the apparatus 800, such as operations associated with display, phone calls, data communications, camera operations, and recording operations. The processing component 802 may include one or more processors 820 to execute instructions to perform all or some of the steps of the methods described above. Additionally, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operation at the apparatus 800. Examples of such data include instructions, contact data, phonebook data, messages, pictures, videos, and the like for any application or method operating on the apparatus 800. The memory 804 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic or optical disk.

The power component 806 provides power to various components of the apparatus 800. The power components 806 may include a power management system, one or more power sources, and other components associated with generating, managing, and distributing power to the apparatus 800.

The multimedia component 808 includes a screen that provides an output interface between the apparatus 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 808 includes a front camera and/or a rear camera. When the apparatus 800 is in an operation mode, such as a shooting mode or a video mode, the front camera and/or the rear camera may receive external multimedia data. Each of the front and rear cameras may be a fixed optical lens system or have focal length and optical zoom capability.

The audio component 810 is configured to output and/or input audio signals. For example, the audio component 810 includes a microphone (MIC) that is configured to receive external audio signals when the apparatus 800 is in operating modes, such as calling mode, recording mode, and voice recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, or the like. These buttons may include, but are not limited to: home button, volume buttons, start button, and lock button.

The sensor assembly 814 includes one or more sensors for providing status assessments of various aspects of the apparatus 800. For example, the sensor assembly 814 can detect the open/closed state of the apparatus 800, the relative positioning of components, such as the display and keypad of the apparatus 800. The sensor assembly 814 can also detect a change in the position of the apparatus 800 or a component of the apparatus 800, the presence or absence of user contact with the apparatus 800, the orientation or acceleration/deceleration of the apparatus 800, and the temperature change of the apparatus 800. The sensor assembly 814 may include a proximity sensor configured to detect the presence of nearby objects in the absence of any physical contact. The sensor assembly 814 may also include a light sensor, such as a CMOS or CCD image sensor, for use in imaging applications. In some embodiments, the sensor assembly 814 may also include an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may access wireless networks based on communication standards, such as WiFi, 4G or 5G, or a combination thereof. In some embodiments, the communication component 816 receives broadcast signals or broadcast related information from an external broadcast management system via a broadcast channel. In some embodiments, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, the apparatus 800 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component, which are configured to perform the forgoing methods.

In some embodiments, there is also provided a non-transitory computer-readable storage medium including instructions, such as the memory 804 including instructions, executable by the processor 820 of the apparatus 800 to perform the method described above. For example, the non-transitory computer-readable storage medium may be ROM, random access memory (RAM), CD-ROM, magnetic tape, floppy disk, optical data storage device, and the like.

Based on the same concept as the above method embodiments, embodiments of this disclosure further provide a communication device, which can have the functions of the network device 101 in the above method embodiments, and is configured to perform the steps performed by the network device 101 in the above embodiments. These functions can be implemented by hardware, by software, or by hardware executing corresponding software. The hardware or software includes one or more modules corresponding to the above functions.

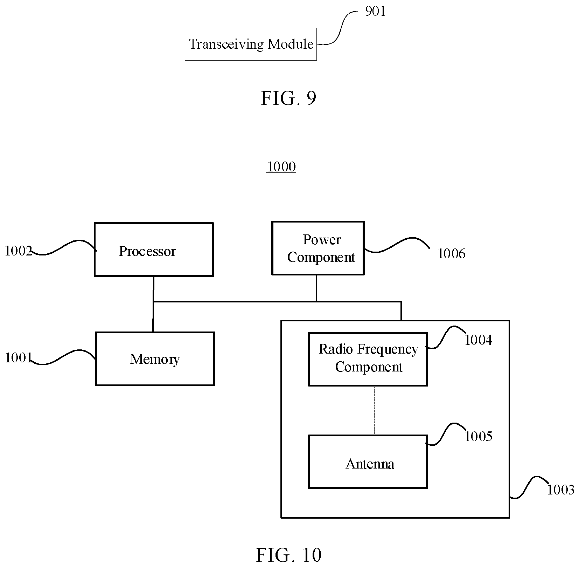

In a possible embodiment, the communication device 900 shown in FIG. 9 can serve as the network device 101 involved in the above method embodiments, and perform the steps performed by the network device 101 in the above method embodiments.

The communication device 900 shown in FIG. 9 includes a transceiving module 901.

The transceiving module 901 is configured to send information indicating a signal quality threshold of at least one broadcast or multicast signal to a UE, where the broadcast or multicast signal is a signal received by an LPWUS receiver of the UE.

In some possible embodiments, the at least one broadcast or multicast signal includes at least one of: a synchronization signal corresponding to the LPWUS receiver, and a wake-up signal corresponding to the LPWUS receiver.

In some possible embodiments, a signal quality corresponding to the signal quality threshold includes at least one of: RSRP, RSRQ, signal amplitude, signal power, and signal energy.

In some possible embodiments, the transceiving module 901 is further configured to send a system message to the UE, where the system message includes the information indicating the signal quality threshold of the at least one broadcast or multicast signal.

In some possible embodiments, a wake-up condition corresponding to the signal quality threshold includes that a difference between the signal quality and the signal quality threshold is less than a preset value. The transceiving module 901 is further configured to send information indicating the preset value to the UE.

When the communication device is a network device, its structure may also be as shown in FIG. 10. The structure of the communication device is described by taking the network device 101 as a base station as an example. As shown in FIG. 10, the device 1000 includes a memory 1001, a processor 1002, a transceiving component 1003, and a power component 1006. The memory 1001 is coupled to the processor 1002 and can be configured to store programs and data necessary for the communication device 1000 to implement various functions. The processor 1002 is configured to support the communication device 1000 to perform corresponding functions in the above methods. These functions can be implemented by calling a program stored in the memory 1001. The transceiving component 1003 may be a wireless transceiver, which may be configured to support the communication device 1000 to receive signaling and/or data and send signaling and/or data through a radio air interface. The transceiving component 1003 may also be called a transceiver unit or a communication unit. The transceiving component 1003 may include a radio frequency component 1004 and one or more antennas 1005. The radio frequency component 1004 may be a remote radio unit (RRU). Specifically, it can be used for the transmission of radio frequency signals and the conversion between radio frequency signals and baseband signals. The one or more antennas 1005 can be specifically used for radiating and receiving radio frequency signals.

When the communication device 1000 needs to send data, the processor 1002 can perform baseband processing on the data to be sent, and then output the baseband signal to the radio frequency unit. The radio frequency unit performs radio frequency processing on the baseband signal and then sends the radio frequency signal in the form of electromagnetic waves through the antenna. When data is sent to the communication device 1000, the radio frequency unit receives the radio frequency signal through the antenna, converts the radio frequency signal into a baseband signal, and outputs the baseband signal to the processor 1002. The processor 1002 converts the baseband signal into data and processes the data.

Other implementations of the disclosed embodiments will be readily apparent to those skilled in the art, upon consideration of the specification and practice of the invention disclosed herein. This application is intended to cover any variations, uses, or adaptations of the embodiments of the disclosure that follow the general principles of the embodiments of the disclosure and include common knowledge or conventional technical means in the art that is not disclosed in the disclosure. It is intended that the specification and examples be considered as exemplary only, with a true scope and spirit of the disclosed embodiments being indicated by the following claims.

It is to be understood that the disclosed embodiments are not limited to the precise structures described above and illustrated in the accompanying drawings, and various modifications and changes may be made without departing from the scope thereof. The scope of the disclosed embodiments is limited only by the appended claims.

### Industrial applicability

The UE obtains the signal quality threshold of at least one broadcast or multicast signal, so that the UE can determine whether to turn on the primary receiver based on the signal quality threshold information, thereby facilitating to turn on the primary receiver in time and enabling the primary receiver to perform RRM measurement(s) as soon as possible. In addition, the UE can control the turning on and off of the primary receiver more accurately, thereby further saving power consumption.

## Claims

1. A method for receiving quality threshold information of signal for waking up a terminal, being performed by a user equipment (UE) and comprising:
receiving information indicating a signal quality threshold of at least one broadcast or multicast signal, wherein the broadcast or multicast signal is a signal received by a low-power wake-up signal (LPWUS) receiver of the UE; and
determining whether to turn on a primary receiver based on the signal quality threshold.

2. The method of claim 1, wherein the at least one broadcast or multicast signal comprises at least one of: a synchronization signal corresponding to the LPWUS receiver, and a wake-up signal corresponding to the LPWUS receiver.

3. The method of claim 2, wherein a quality threshold of the synchronization signal and a quality threshold of the wake-up signal are the same or different.

4. The method of claim 1, wherein a signal quality corresponding to the signal quality threshold comprises at least one of: reference signal receiving power (RSRP), reference signal receiving quality (RSRQ), signal amplitude, signal power, and signal energy.

5. The method of claim 1, wherein receiving the information indicating the signal quality threshold of the at least one broadcast or multicast signal comprises:
receiving a system message, wherein the system message comprises the information indicating the signal quality threshold of the at least one broadcast or multicast signal.

6. The method of claim 1, wherein receiving the information indicating the signal quality threshold of the at least one broadcast or multicast signal comprises:
receiving, by using the primary receiver in an operating state, the information indicating the signal quality threshold of the at least one broadcast or multicast signal.

7. The method of claim 1, further comprising:
measuring, by using the LPWUS receiver, a signal quality of the at least one broadcast or multicast signal;
wherein determining whether to turn on the primary receiver based on the signal quality threshold comprises:
determining whether to wake up the primary receiver based on the signal quality and the signal quality threshold.

8. The method of claim 7, wherein determining whether to wake up the primary receiver based on the signal quality and the signal quality threshold comprises:
in response to the signal quality meeting a wake-up condition corresponding to the signal quality threshold, waking up the primary receiver.

9. The method of claim 8, wherein the wake-up condition is: the signal quality is less than or equal to the signal quality threshold information, or the signal quality is greater than the signal quality threshold and a difference is less than a preset value.

10. The method of claim 9, further comprising:
receiving information indicating the preset value sent by a network device; or determining the preset value according to a protocol.

11. The method of claim 8, further comprising:
sending, through the LPWUS receiver, information indicating a wake-up cause to the primary receiver, wherein the wake-up cause is that the signal quality meets the wake-up condition corresponding to the signal quality threshold.

12. A method for receiving quality threshold information of signal for waking up a terminal, being performed by a network device and comprising:
sending information indicating a signal quality threshold of at least one broadcast or multicast signal to a user equipment (UE), wherein the broadcast or multicast signal is a signal received by a low-power wake-up signal (LPWUS) receiver of the UE.

13. The method of claim 12, wherein the at least one broadcast or multicast signal comprises at least one of: a synchronization signal corresponding to the LPWUS receiver, and a wake-up signal corresponding to the LPWUS receiver.

14. The method of claim 13, wherein a quality threshold of the synchronization signal and a quality threshold of the wake-up signal are the same or different.

15. The method of claim 12, wherein a signal quality corresponding to the signal quality threshold comprises at least one of: reference signal receiving power (RSRP), reference signal receiving quality (RSRQ), signal amplitude, signal power, and signal energy.

16. The method of claim 12, wherein sending the information indicating the signal quality threshold of the at least one broadcast or multicast signal comprises:
sending a system message, wherein the system message comprises the information indicating the signal quality threshold of the at least one broadcast or multicast signal.

17. The method of claim 12, wherein the signal quality threshold corresponds to a wake-up condition, and the wake-up condition comprises that a difference between a signal quality and the signal quality threshold is less than a preset value; and
the method further comprises: sending information indicating the preset value to the UE.

18. An apparatus for receiving quality threshold information of signal for waking up a terminal, being configured at a user equipment (UE) and comprising:
a transceiving module, configured to receive information indicating a signal quality threshold of at least one broadcast or multicast signal, wherein the broadcast or multicast signal is a signal received by a low-power wake-up signal (LPWUS) receiver of the UE; and
a processing module, configured to determine whether to turn on a primary receiver based on the signal quality threshold.

19. An apparatus for sending quality threshold information of signal for waking up a terminal, being configured at a network device and comprising:
a transceiving module, configured to send information indicating a signal quality threshold of at least one broadcast or multicast signal, wherein the broadcast or multicast signal is a signal received by a low-power wake-up signal (LPWUS) receiver of the UE.

20. An electronic device, comprising a processor and a memory, wherein,
the memory is configured to store a computer program; and
the processor is configured to execute the computer program, thereby implementing the method according to any one of claims 1-11.

21. A communication device, comprising a processor and a memory, wherein,
the memory is configured to store a computer program; and
the processor is configured to execute the computer program, thereby implementing the method according to any one of claims 12-17.

22. A computer-readable storage medium storing instructions thereon, wherein the instructions, upon being invoked and executed on a computer, cause the computer to implement the method according to any one of claims 1 to 11.

23. A computer-readable storage medium storing instructions thereon, wherein the instructions, upon being invoked and executed on a computer, cause the computer to implement the method according to any one of claims 12 to 17.
